(19) Europäisches Patentamt / European Patent Office / Office européen des brevets

(11) **EP 4 779 097 A2**

(12) # EUROPEAN PATENT APPLICATION

(43) Date of publication:
**22.07.2026 Bulletin 2026/30**

(21) Application number: **26182894.1**

(22) Date of filing: **02.04.2020**

(51) International Patent Classification (IPC):
***E04B 1/76*** (2006.01)

(52) Cooperative Patent Classification (CPC):
**E04D 12/00; B32B 5/022; B32B 5/26; B32B 7/12; B32B 11/10; D04H 1/4209; D04H 1/593; D04H 1/76; E04D 13/16;** B32B 2260/021; B32B 2260/046; B32B 2262/101; B32B 2262/108; B32B 2307/102; B32B 2307/206; (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2019 EP 19167613**

(62) Document number(s) of the earlier application(s) in accordance with Art. 76 EPC:
**20715879.1 / 3 947 846**

(71) Applicant: **ROCKWOOL A/S**
**2640 Hedehusene (DK)**

(72) Inventors:
• **Ghijzen, Cor J.M.**
**6114 MZ Susteren (NL)**

• **Andersen, Lars Baungaard**
**4623 Lille Skensved (DK)**

(74) Representative: **Brinkmann & Partner Patentanwälte Partnerschaft mbB Am Seestern 8 40547 Düsseldorf (DE)**

Remarks:
This application was filed on 03.06.2026 as a divisional application to the application mentioned under INID code 62.

(54) **INSULATION ELEMENT FOR THERMAL AND/OR ACOUSTIC INSULATION OF A FLAT OR FLAT INCLINED ROOF AND METHOD FOR PRODUCING AN INSULATION ELEMENT**

(57) Insulation element for thermal and/or acoustic insulation of a flat or flat inclined roof, comprising a first layer made of mineral wool, especially stone wool and a second layer made of at least one fabric, especially a fleece, whereby the second layer is fixed to a major surface of the first layer by an adhesive, whereby the first layer is made of at least one lamella having a fiber orientation predominantly perpendicular to major surfaces of the second layer, and whereby the first layer contains a cured binder, whereby the adhesive is arranged partly in an area between fibers close to the major surface of the first layer directed to the second layer and in an area close to the major surface of the second layer directed to the first layer thereby forming an area in which most of the porous structure of the lamella surface is closed by the adhesive so that the adhesive connects the first layer and the second layer in such a way that forces directed perpendicular to the second layer can be compensated by the tensile strength of the second layer in combination with the adhesive and/or the deflection of the fibers of the first layer causing a maximum deformation of ≤ 5 % of the thickness of the first and the second layer and whereby the adhesive is provided in an amount between 60 g/m$^2$ and 400 g/m$^2$, preferably between 100 g/m$^2$ and 250 g/m$^2$, more preferably in an amount of 150 g/m$^2$, between the first layer and the second layer, wherein the adhesive is chosen from melamine urea formaldehyde, preferably as two component glue, water borne acrylic glue, phenol formaldehyde powder binder, water borne neoprene foam glue, polyamide based powder glue, polyurethane glue, preferably as two component glue, polyurethane moisture curing glue or silane modified binder, preferably as one component moisture curing glue.

Fig. 1

**(Cont. next page)**

(52) Cooperative Patent Classification (CPC): (Cont.)
B32B 2307/54; B32B 2307/718; B32B 2307/72;
B32B 2419/06; E04B 2001/7683; Y02A 30/254;
Y02B 80/32

**Description**

The invention relates to an insulation element for a thermal and/or acoustic insulation of a flat or flat inclined roof, comprising a first layer made of mineral wool, especially stone wool and a second layer made of at least one fabric, especially a fleece, whereby the second layer is fixed to a major surface of the first layer by an adhesive, whereby the first layer is made of at least one mineral wool lamella element having a fiber orientation predominantly perpendicular to its major surfaces. Moreover, in that the first layer contains a cured binder. Furthermore, the invention relates to a method for producing an insulation element described before.

Flat roofs and flat inclined roofs are well-known in the prior art, e.g. as membrane roof systems which are generally divided into the following types, according to the position in which the principle thermal insulation is placed: warm roofs, inverted warm roofs, roof gardens or green roofs, and cold roofs.

Membrane roof systems are used to protect flat roofs or flat inclined roofs from all weather conditions likely to be experienced during their design life. They are often build as single ply roofing systems, in particular for larger roofs, or they are built of bituminous membranes, in particular reinforced bitumen membranes (RBM). The latter are typically applied in two or more layers of sheet materials rolled out over the thermal and/or acoustic insulation element. A typical membrane roof system comprises: a structural support, a deck providing continuous support, e.g. a steel or concrete deck, a vapour control layer (if required), thermal insulation (if required), a waterproof membrane and a traffic or load resistant finish (if required for functional and/or esthetic reasons).

The present invention primarily aims at the so-called warm roofs in which the principal thermal insulation is placed immediately below the roof covering, namely the waterproof membrane. The three principal options for attachment of single ply roofing systems are mechanical fastening, adhesion/hot bonding/cold gluing, ballast, whereby the insulation and the membrane may be either attached by the same or a different method. Preferably, the single ply waterproof membrane or waterproof lining is attached to the substrate, i.e. the insulation layer, by cold gluing using a suitable cold adhesive. Whereas reinforced bitumen membranes (RBM) are typically applied by torching. In this method, specially designed bituminous membranes are heated from their bottom side with a gas torch in order to liquefy some of the bitumen and no separate bonding bitumen or glue is needed. Torching requires special measures and precautions against fire, and is not suitable over or adjacent to flammable materials.

Mineral wool insulation elements for a thermal and/or acoustic insulation of a flat roof or a flat inclined roof are well-known in the art. Respective products and general requirements are specified in European Standard EN 13162:2012+A1:2015, *"Thermal insulation products for buildings - Factory made mineral wool (MW) products".*

These mineral wool insulation elements or respective products typically comprise layered or crimped products of comparably high densities, usually above 150 kg/m$^3$ and up to 250 kg/m$^3$ in order to provide the respective mechanical resistance for the use on a flat or flat inclined roof system. Their fiber orientation is predominantly laminar to the major surfaces of said elements or somewhat meandering as a result of a longitudinal compression of the primary web before curing. In light of increasing thermal requirements and thus increasing product thicknesses such mineral wool insulation elements in the form of boards become heavier and heavier and in many instances therefore two layers of insulation elements are required to fulfil local building codes with respect to thermal performance. Installation of two layers of insulation is time consuming and labor intense. On the other hands boards with higher bulk density have to be smaller and/or thinner to be handled by only one person.

Within other building insulation applications, in particular within the façade insulation segment, in particular in external thermal insulation composite systems, so called lamella products are well known. Lamella products are manufactured from board-type laminar preproducts of which slices are cut and subsequently turned by 90° so that the resulting insulation elements comprise a fiber orientation being predominantly perpendicular to major surfaces. Said lamella products however are sensible to forces applied in a direction parallel to their predominant fiber orientation, i.e. compressive forces or loads. That is one of the reasons why the lamella products are not common for the use on flat or flat inclined roofs. Where lamella products are used for insulation on a respective roof, they need to be covered with a load distribution layer, e.g. additional high-density mineral wool cover boards or other sheet-like materials, like e.g. wood-based building boards. The additional installation of a cover or load distribution layer is time consuming and labor intense.

With respect to layered or crimped roof products recent attempts set out to improve their range of application with respect to the attachment of the waterproof membrane. By way of example reference is made to EP 2 753 770 B1 which relates to insulation elements for thermal and/or acoustic insulation of a flat roof or a flat inclined roof comprising a first layer made of mineral fibers, especially stone wool fibers, a second layer made of at least one fabric, especially a fleece being impregnated, whereby the second layer is fixed to a major surface of the first layer by an adhesive, whereby the second layer is impregnated with an inorganic filler, especially lime and whereby the second layer in combination with the filler has a permeability allowing hot air gases to pass through the second layer and closing the second layer for the penetration of a glue or adhesive in the direction of the first layer. Respective products have proven to be suitable for the adhesion/cold gluing of the waterproof membrane and due to the inorganic impregnation of the second layer also for the torching of e.g. bituminous membranes. The resulting products however, are heavy and their production costly as their thickness range is limited and specialized fleeces for the second layer are required.

One of the main aspects of such flat roof or flat inclined roofs in use are the possibility to access and walk on at least parts of the roof without damaging especially the waterproof membrane and insulation elements. Thus, a corresponding support of the waterproof membrane from the insulation elements and respective mechanical resistance is required, giving a person walking on such a roof a safe impression in that the components on top of the supporting deck do not buckle or indulge. Roofs might be classified according to their accessibility whereby roofs where special equipment is required for access for the purpose of maintenance are differentiated from roofs accessible only for the purpose of maintenance; from roofs accessible for frequent maintenance of equipment placed on the roof; from roofs accessible to pedestrian traffic; from roofs accessible to light weight vehicles; from roofs accessible to heavy vehicles and from roof gardens. With respect to the invention, only roofs are covered having behavior on exposure to mechanical stress with regard to the compressibility with a test load of 40 up to 80 kPa and a certain temperature up to 80° C. Said roofs are accessible to pedestrian traffic and may be used where frequent maintenance of equipment is envisaged. Furthermore, such roofs being test loaded with a higher load are accessible to light weight vehicles and can only be used where the waterproof covering is protected by concrete paving or similar.

It is an object of the invention to improve the mechanical characteristics of a mineral wool lamella insulation element preferably with respect to the stability of the insulation element under distributed static loads. Especially with regard to the walkability on roofs accessible to pedestrian traffic and/or to light weight vehicles especially with respect to a safe impression for a person walking on the roof in that the components on top of the deck providing continuous support, buckle or indulge only in a very small interval. Moreover, it is an object of the present invention to provide a mineral wool lamella insulation element which is light-weight but mechanically strong, easy to handle and can be applied fast and in only one layer even at large thicknesses.

Furthermore, it is an object to provide a method for producing an insulation element with which such an insulation element can be produced at low costs and being improved with respect to its mechanical characteristics especially with respect to its walkability performance on roofs accessible to pedestrian traffic and/or to lightweight vehicles.

According to the invention, the solution with respect to the mineral wool insulation element is achieved in that the adhesive is arranged partly in an area between fibers close to the major surface of the first layer directed to the second layer and in an area close to the major surface of the second layer directed to the first layer so that the adhesive connects the first layer and the second layer in such a way that forces directed perpendicular to the second layer can be compensated by the tensile strength of the second layer in combination with the adhesive and/or the deflection of the fibers of the first layer causing an improved walkability, respectively a maximum deformation of $\leq 5\%$ of the thickness of the insulation element and whereby the adhesive is provided in an amount between 60 g/m$^2$ and 400g/m$^2$, preferably between 100 g/m$^2$ and 250 g/m$^2$, more preferably in an amount of 150 g/m$^2$ between the first layer and the second layer.

The insulation element according to the invention therefore consists of a first layer in the form of a mineral wool lamella element consisting of mineral fibers and a cured binder on which a second layer made of a fabric, especially a fleece is fixed to the major surface of the lamella by the use of an adhesive. The adhesive may be applied to the surface of the lamella and/or the fabric. It might be worked into the lamella and/or into the fleece thereby arranging the adhesive between the fibers of the lamella and between parts of the fabric in such a way that forces directed perpendicular to the second layer are compensated by the tensile strength of the second layer in combination with the adhesive and/or the deflection of the fibers of the first layer resulting in an extremely limited deformation and increased point load work of the insulation element. This leads to an improved walkability, respectively a maximum deformation of $\leq 5\%$ of the thickness of the insulation element. The maximum deformation is the result of the fiber orientation on the one hand and the use of suitable adhesive, and especially the use of a second layer on the other hand. Said second layer is made of at least one fabric being connected to the lamella by use of an adhesive which is annotated between the fibers of the lamella surface forming an area in which most of the porous structure of the lamella surface is closed by the adhesive whereby up to 90% of the pore volume of the surface in this area can be filled with the adhesive. As a result the adhesive builds up a closed layer even in this area which is able to withstand longitudinal forces in a direction perpendicular to the fiber orientation of the lamella. On the other hand, the adhesive is also penetrated into the porous structure close to the surface of the fabric building up a nearly closed layer within the fabric with the same characteristics as in the area in the upper part of the lamella.

It has been found out that the amount of adhesive according to the invention builds up sufficient strength of the insulation element especially sufficient tensile strength of the adhesive whereby the insulation characteristics, especially the thermal insulation characteristics are not reduced in an amount that thicker insulation elements have to be used to fulfill all requirements of the insulation characteristics in the roof.

Therefore, the adhesive preferably builds up a nearly closed layer connecting the fibers to each other as well as the components of the fabric. The layer of adhesive has a sufficient tensile strength which is supported by the connection to the fibers of the first layer and the components of the fabric so that a force submitted perpendicular to the surface of the insulation element e. g. by a person walking on the roof is at least partly compensated by the tensile strength of the adhesive and/or the second layer in combination with a deflection of the fibers of the first layer at least partly surrounded by the adhesive.

Preferably, the second layer is connectable to a bituminous membrane by torching or to membranes by cold gluing so that these insulation elements are usable with respect to many different roof insulations.

According to a further aspect of the invention, the adhesive is chosen from melamine urea formaldehyde, preferably as two-component glue, waterborne acrylic glue, phenol formaldehyde powder binder, waterborne neoprene foam glue, polyamide based powder glue, polyurethane glue, preferably as two-component glue, polyurethane moisture curing glue or sealing modified binder, preferably as one-component moisture curing glue. All these adhesives build up a good connection to mineral fibers and all these adhesives are able to build up nearly closed layers in the area of the lamella as well as in the area of the fabric thereby strengthening the insulation element in a direction parallel to the big surfaces of the lamella.

The adhesive is provided in an amount between 60 $g/m^2$ and 400$g/m^2$, preferably between 100 $g/m^2$ and 250 $g/m^2$, more preferably in an amount of 150 $g/m^2$ between the first layer and the second layer.

The amount of adhesive provided between the first and the second layer as defined above is to be understood as either wet applied or dry applied matter depending on the type of adhesive chosen. By way of example, two different references are mentioned in the following.

In case of a wet applied glue, like e.g. waterborne acrylic glue, the adhesive is applied in an amount of approx. 150 $g/m^2$ which corresponds to approx. 90 $g/m^2$ of dry amount (after drying/curing) whereby the dilution of such adhesive in order to be applied by commonly known wet application methods is typically around 60 % dry matter diluted in a liquid. This will in a similar manner count for the above listed waterborne neoprene foam glue, however the dilution range may differ.

In respect to dry applied adhesives, like e.g. phenol formaldehyde powder binder, or polyamide based powder glue, the amount applied is meant to define dry matter which will not substantially change upon subsequent drying or curing. Therefore, those amounts are typically to be found in the lower range of the above defined ranges, i.e. amounts between 60 $g/m^2$ and 250 $g/m^2$, preferably between 80 $g/m^2$ and 150 $g/m^2$.

The adhesive is provided full face between the first layer and the second layer giving a very strong connection between the layers and building up two nearly complete layers within the two areas of the first layer and the second layer being filled up with the adhesive. The advantage of this embodiment is that even if the adhesive is only provided in a thin layer within the areas, a tensile strength of these layers is sufficient to limit the maximum deformation of the insulation element loaded with a man with normal weight of 80 kg walking on the roof or forces caused by pedestrian traffic and/or by lightweight vehicles.

As a measure for a strong bond between the layers and to ensure sufficient bonding the peel off strength of the second layer is a crucial feature to be elaborated while producing respective insulation elements. The so-called peeling strength or peel off strength is an important measure for the strength of the connection between an insulation element and such second layer, e.g. a glass-fleece. With other words, the adhesion of a respective glass-fleece on the mineral wool board is important, especially for roof boards; such roof boards in the installed state must withstand wind impacts. The peeling strength or peel off strength is tested by an internal method and shows the peeling strength which a product receives when it is bonded to a waterproof covering or lining element. By testing the peeling strength, the second layer as a top layer is removed from the insulation element. The cross-sectional area of an adhesive connection is chosen to one third of the sample area. The peeling strength is measured perpendicular to the surface of the insulation element being bonded in its length with a glass fleece and with the help of an additionally applied self-adhesive lining element transferring the load as the glass-fleece as such wouldn't withstand the applied forces. First the test specimen is positioned or fixed in a guide rail, so that the bitumen membrane can be peeled off vertically. I.e., the insulation element is vertically kept in place by the mentioned guide rail which is positioned at a lower traverse of a material testing machine, e.g. commercially available at ZwickRoell. Said guide rail however ensuring that the specimen can move in a horizontal direction and no additional shear forces are introduced while testing. One end of a respective bitumen membrane is clamped into a mounting fixture at an upper traverse and comprising a load cell. The peeling strength for a given length is determined. The dimensions of the specimens are chosen to a length of 350 mm and a width of 150 mm for the insulation element, and a length of 450 mm and a width of 50 mm for the lining element. A pre-load of 2,5 +/- 0,25 N is applied and the lining element together with the glass fleece is torn from the insulation element with a test speed of 100 +/- 5 mm/min thereby giving a peeling strength measured in [N/50mm]. Preferably the thermal and/or acoustic insulation element for use within insulation of a flat or flat inclined roof provides a peel off strength perpendicular to the major surface of the insulation element of at least 7,5 [N/50mm], preferably of at least 10 [N/50mm].

According to a further embodiment of the invention the layer made of mineral fibers and binder, preferably in an amount of 3 to 7 wt.-%, has a bulk density of 80 to 120 kg/m³ and a compression strength between 50 and 130 kPa measured in accordance with European Standard EN 826: 2013.

A further improvement of the insulation element according to the invention is achieved in that the second layer is made of a glass-fleece, preferably having an E-modulus of 450 to 900 MPa, preferably of 500 to 800 MPa and/or a tensile strength between 50 and 110 N, preferably between 70 and 90 N according to European Standard EN ISO 1924-2:2009. Such an insulation element can be used in flat roof and/or flat inclined roofs and can be loaded with a man walking on the roof with limited deflection and good walkability or even with small vehicles without deflecting the surface in an amount of more than 5% of the thickness of the insulation element.

Finally, according to a further embodiment of the invention, the adhesive is provided with an inorganic filler. Such an inorganic filler, which might be represented by a lime, has the advantage that the fire resistance of the insulation element is improved and such a filler further improves the point load characteristics due to the presence and the load distributing properties of the glass fiber fleece.

The insulation element according to the invention gives excellent, mechanical characteristics, especially improved walkability as compared to a comparable panel having only a layer of tissue across its surface.

With respect to the method for producing an insulation element according to the description, the object is solved in that a first layer made of at least one mineral wool lamella having a fiber orientation predominantly perpendicular to its major surfaces and consisting of mineral fibers and a cured binder is connected to a second layer by an adhesive. Said adhesive being arranged partly in an area between fibers close to the major surface of the first layer directed to the second layer and in an area close to the major surface of the second layer directed to the first layer so that the adhesive connects the first layer and the second layer in such a way that forces directed perpendicular to the second layer can be compensated by the tensile strength of the second layer in combination with the adhesive and/or the deflection of the fibers of the first layer causing an improved walkability, respectively a maximum deformation of ≤ 5% of the thickness of the first and second layer. The adhesive is applied to the first layer and/or to the second layer before connecting the two layers. When connecting the two layers the adhesive penetrates into the pores of the first and/or second layer where the adhesive cures after connecting the layers. The penetration can be increased by pressing the two layers onto each other or by a mechanical force applied to the adhesive before connecting the two layers.

The tests in order to evaluate the maximum deformation of the insulation element and its behavior on exposure to mechanical stress and at a certain temperature are carried out on a representative number of samples of the insulation element of 300 X 300 mm. Said test consists of keeping the test specimens at a temperature of e.g. 80°C and measuring their deformation in a controlled atmosphere whilst the test load of 40 or 80 kPa remains in place. First the initial thickness of the test specimen is determined at a temperature of 23°C under 1 kPa pressure distributed over the entire area and subsequently the test load is applied. The test load is maintained for 7 days and at an elevated temperature of 80°C. Frequent measurements of the samples thickness respectively the deformation may take place during the test period. After 7 complete days, the stabilized thickness of the samples is finally measured and the average resulting deformation being calculated based on the initial and final thickness. The maximum relative deformation shall be ≤ 5 % of the initial thickness of the insulation element.

The invention is illustrated in the accompanying drawing in which

Fig. 1　shows a part of a flat roof in cross-section;

Fig. 2　shows a diagram of the point load of a first embodiment of the insulation element;

Fig. 3　shows a point load work of the first embodiment of the invention according to Fig. 2;

Fig. 4　shows a diagram of the point load of a second embodiment of the insulation element and

Fig. 5　shows a point load work of the second embodiment of the invention according to Fig. 4.

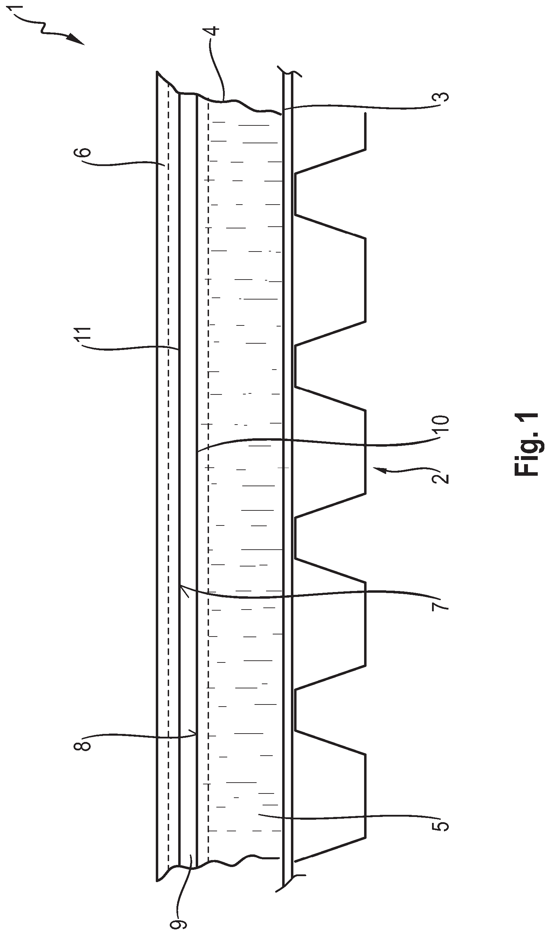

Figure 1 shows a part of a flat roof 1 comprising a structural support 2, a vapour control layer 3 and an insulation element 4. The insulation element 4 comprises a first layer 5 comprising stone wool fibers and a binder and a second layer 6 made of a fabric of a glass fleece, having an E-modulus of 573 MPa. The tensile strength of the glass fleece is 71 N.

The first layer 5 is represented by one or more lamella having a fiber orientation predominantly perpendicular to a major surface 7 of the second layer 6. The lamella and therefore the first layer 5 have a density of 110 kg/m³ and a typical thickness of 150 mm. The mineral fibers are bonded together via the binder being cured in a hardening oven before the second layer 6 is fixed to a surface 8 of the first layer 5 via an adhesive 9.

The adhesive 9 is arranged partly in an area 10 close to the major surface 8 of the first layer 5 directed to the second layer 6 and in an area 11 close to the major surface 7 of the second layer 6 directed to the first layer 5 so that the adhesive 9 connects the first layer 5 and the second layer 6 in such a way that forces directed perpendicular to the second layer 6 can be compensated by the tensile strength of the second layer 6 in combination with the adhesive 9 and/or the deflection of the fibers of the first layer 5. Such a force of e. g. 80 kPa directed perpendicular to the second layer 6 causes a limited deformation of smaller 5% of the insulation element 4 (first and second layer 5, 6) and therefore of not more than 7,5 mm related to the thickness of 150 mm of the first layer 5. The thickness of the second layer 6 is approximately not more than 1 mm and can therefore be disregarded in this calculation. A sufficient amount of adhesive 9 is arranged between the fibers of the first layer 5 thereby surrounding the fibers and building up a layer of adhesive 9 being anchored in the first layer 5.

The adhesive 9 is arranged with an amount of 80 g/m$^2$ between the two layers 5 and 6 as an acrylic glue. A sufficient amount of the adhesive 9 diffuses in the first layer 5 and the second layer 6. The adhesive 9 constitutes therefore a layer connecting the first layer 5 and the second layer 6 and is anchored in both layers 5, 6

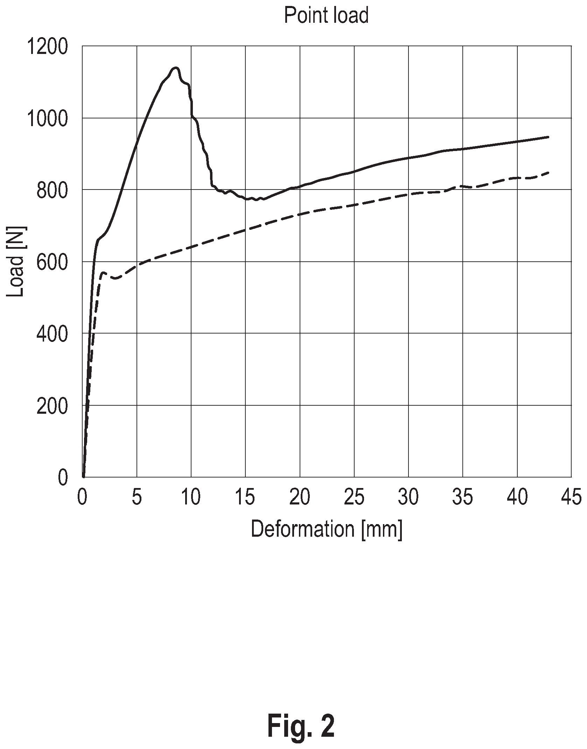

Fig. 2 shows a diagram with two graphs whereby the lower graph (dotted line) is the relation of load to deformation in a lamella as already known from the prior art. The upper graph shows the load in relation to the deformation of an insulation element 4 according to the invention.

The density of the mineral wool lamella in the insulation element 4 according to the invention is 110 kg/m$^3$. The second layer 6 has a tensile strength of 71 N and an E-modulus of 573 MPa. Both layers 5, 6 are connected via an acrylic glue in an amount of 80 g/m$^2$.

As it can be seen from the upper graph, the point load strength of the insulation element 4 is improved significantly by the second layer 6 in connection with the layer of adhesive 9. In the area of small deformations between 0 and 1,5 mm both elements (lamella and insulation element according to the invention) show elastic properties but the insulation element according to the invention takes a higher load meaning this insulation element has a higher E-Modulus compared to a lamella as known from the prior art.

In the area from 1,5 to 12 mm, the insulation element 4 according to the invention is much stronger compared to a lamella known from the prior art. These improvements of the point load strength, especially at small deformations, can also be perceived as improved walkability.

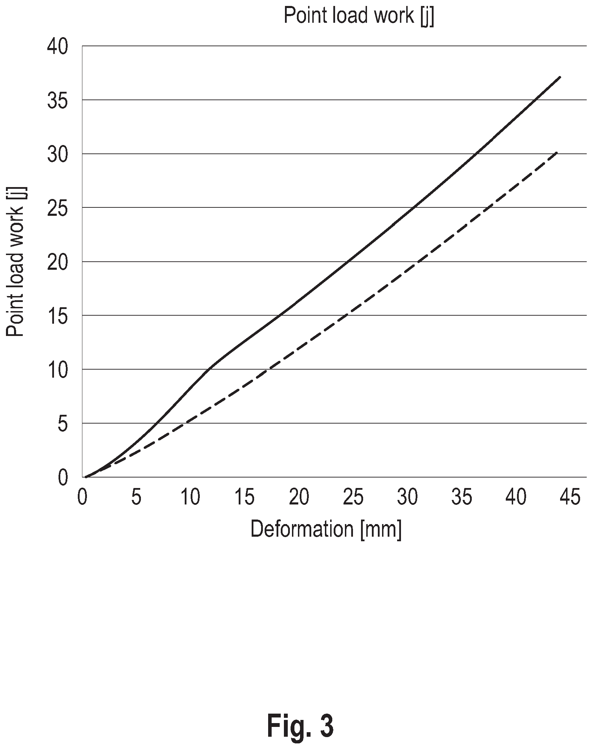

Fig. 3 shows a second diagram for the before described insulation element 4 showing the point load work [j] in relation to the deformation. Once again, the upper graph belongs to the insulation element 4 according to the invention and the lower graph (dotted line) belongs to a lamella according to the prior art.

The current invention proves that the walkability of an insulation element 4 is related to the product of the load and the deformation that occurs when a person walks on the insulation element 4. A respective load can also be described as the force and the deformation as the displacement.

The product of point load and deformation is the work based on the general equation

$$\text{work} = \text{force} \times \text{displacement}$$

Higher work means better walkability. Especially for deformation in the range of 0 to 10 mm or point load up to 800 N, this is important. In the graph (dotted line) according to Fig. 3, the work for the same lamella as in the previous graph in fig. 2 is shown.

As it can be seen from the graph for the insulation element 4 according to the invention, the work is around 25% higher than after 5 mm deformation and around 80% higher after 10 mm deformation. This improves the walkability significantly.

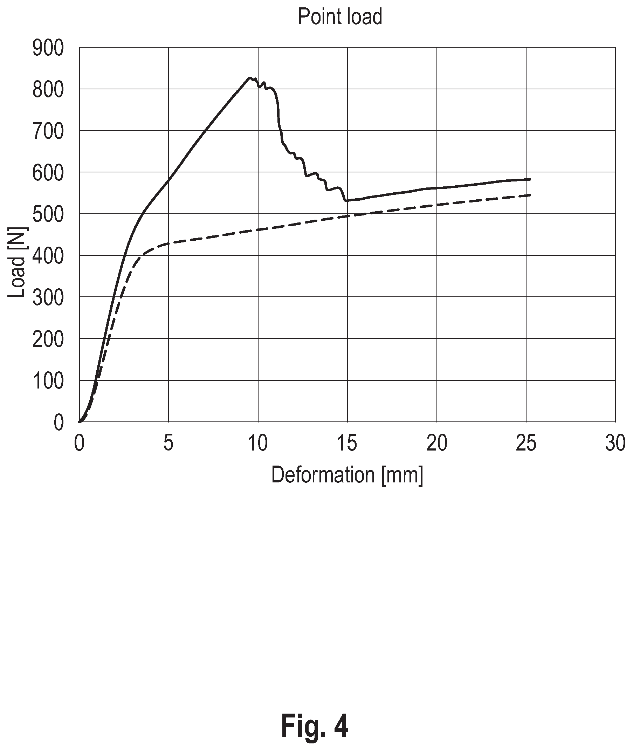

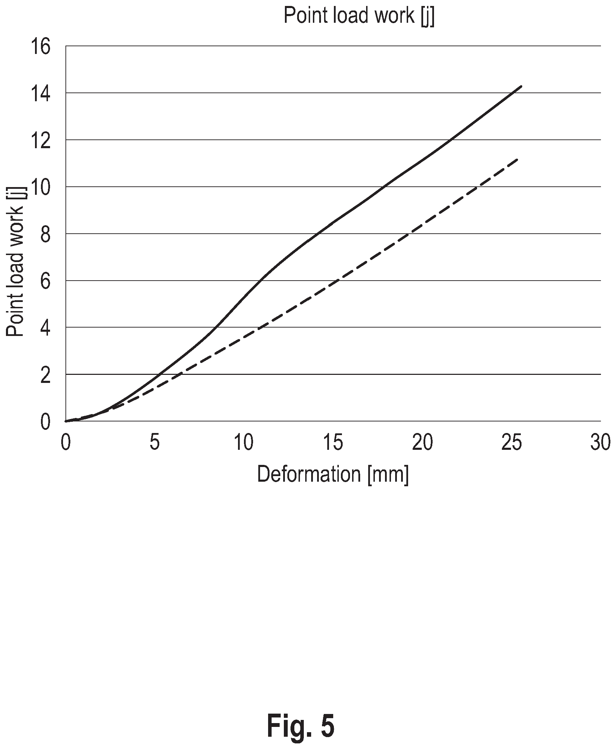

Such results can even be achieved by using a lamella with a density of 85 kg/m$^3$ as it is shown in Figures 4 and 5. All other parameters are equal to the parameters of Figures 2 and 3.

The point load measurements are carried out according to European Standard EN12430:2013, *"Thermal insulating products for building applications-determination of behavior under point load"*.

Reference numerals

1   roof
2   support
3   vapour control layer
4   insulation element
5   layer
6   layer
7   surface
8   surface
9   adhesive
10  area
11  area

**Claims**

1.  Insulation element for thermal and/or acoustic insulation of a flat or flat inclined roof, comprising a first layer made of mineral wool, especially stone wool and a second layer made of at least one fabric, especially a fleece, whereby the second layer is fixed to a major surface of the first layer by an adhesive, whereby

    the first layer is made of at least one lamella having a fiber orientation predominantly perpendicular to major surfaces of the second layer, and whereby the first layer contains a cured binder,
    **characterized in that**
    the adhesive is arranged partly in an area between fibers close to the major surface of the first layer directed to the second layer and in an area close to the major surface of the second layer directed to the first layer thereby forming an area in which most of the porous structure of the lamella surface is closed by the adhesive so that the adhesive connects the first layer and the second layer in such a way that forces directed perpendicular to the second layer can be compensated by the tensile strength of the second layer in combination with the adhesive and/or the deflection of the fibers of the first layer causing a maximum deformation of $\leq$ 5 % of the thickness of the first and the second layer and whereby the adhesive is provided in an amount between 60 g/m$^2$ and 400 g/m$^2$, preferably between 100 g/m$^2$ and 250 g/m$^2$, more preferably in an amount of 150 g/m$^2$, between the first layer and the second layer, wherein the adhesive is chosen from melamine urea formaldehyde, preferably as two component glue, water borne acrylic glue, phenol formaldehyde powder binder, water borne neoprene foam glue, polyamide based powder glue, polyurethane glue, preferably as two component glue, polyurethane moisture curing glue or silane modified binder, preferably as one component moisture curing glue.

2. Insulation element according to claim 1,
   **characterized in that**
   the second layer is made of a glass fleece, preferably having an E-modulus of 450 to 900 MPa, preferably of 500 to 800 MPa and/or a tensile strength between 50 and 110 N, preferably between 70 and 90 N.

3. Insulation element according to any of claims 1 or 2,
   **characterized in that**
   a dry applied adhesive, preferably a phenol formaldehyde powder binder or a polyamide based powder glue, is arranged in an amount between 60 g/m$^2$ and 250 g/m$^2$, preferably between 80 g/m$^2$ and 150 g/m$^2$, between the first layer and the second layer.

4. Insulation element according to any of claims 1 to 3,
   **characterized in that**
   the adhesive is provided full faced between the first layer and the second layer.

5. Insulation element according to any of claims 1 to 4,
   **characterized in that**
   the first layer made of mineral fibers and binder, the binder being present in an amount of preferably between 3 and 7 wt.-%, has a bulk density of 80 to 120 kg/m$^3$ and a compression strength between 50 and 130 kPa.

6. Method for producing an insulation element according to one of the claims 1 to 5,
   **characterized in that**

a first layer made of at least one lamella having a fiber orientation predominantly perpendicular to its major surfaces and consisting of mineral fibers and a cured binder is connected to a second layer by an adhesive being arranged partly in an area between fibers close to the major surface of the first layer directed to the second layer and in an area close to the major surface of the second layer directed to the first layer thereby forming an area in which most of the porous structure of the lamella surface is closed by the adhesive so that the adhesive connects the first layer and the second layer in such a way that forces directed perpendicular to the second layer can be compensated by the tensile strength of the second layer in combination with the adhesive and/or the deflection of the fibers of the first layer causing a maximum deformation of $\leq$ 5 % of the thickness of the first and second layer whereby the adhesive is applied to the first and/or the second layer before connecting the two layers and cure the adhesive and whereby the adhesive is provided in an amount between 60 g/m$^2$ and 400 g/m$^2$, preferably between 100 g/m$^2$ and 250 g/m$^2$, more preferably in an amount of 150 g/m$^2$ between the first layer and the second layer.

7. Method according to claim 6,
   **characterized in that**
   the adhesive is arranged on the major surface of the first and/or second layer before the second layer is arranged on the first layer thereby pressing the adhesive into pores of the first and/or second layer and whereby the adhesive is cured after connecting the layers.

**Fig. 1**

EP 4 779 097 A2

Point load

Fig. 2

**Fig. 3**

Fig. 4

Point load work [j]

Fig. 5

**EP 4 779 097 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2753770 B1